# EUROPÄISCHE PATENTANMELDUNG

(11) **EP 1 099 572 A2**
(43) Veröffentlichungstag der Anmeldung: **16.05.2001**
(21) Anmeldenummer: 00124174.4
(22) Anmeldetag: 08.11.2000
(51) Int. Cl.: B60C 5/00

(54) **Schallabsorbierender Einbau aus flexiblen Fasern für einen Fahrzeugluftreifen**

(30) Priorität: 12.11.1999 US 165156; 20.10.2000 US 693572
(71) Anmelder: Continental Aktiengesellschaft, 30165 Hannover (DE)
(72) Erfinder: Britton, J. Daniel, Dr., Charlotte, North Carolina 28226 (US); Janello, Thomas Anthony, Fort Mill, South Carolina 29708 (US); Fidan, Mehmet Sadettin, 30827 Garbsen (DE)

(57) **Zusammenfassung**

Schallabsorbierender Einbau (3) für ein Fahrzeugrad mit einem Fahrzeugluftreifen (2)wobei der Einbau für einen Sitz auf der Felge (1) vorgesehen ist und innerhalb des Luftreifens (2) die Felge (1) ringförmig umgibt und aus einem mit einem streifenförmigen Trägergewebe (4) verbundenen Flor aus flexiblen Fasern (5) besteht, wobei sich die Fasern (6) des Flors innerhalb des zwischen Felge (1) und Reifen (2) ausgebildeten Hohlraumes in radialer Richtung erstrecken.

## Beschreibung

Die Erfindung betrifft einen schallabsorbierenden Einbau für ein Fahrzeugrad mit einem Fahrzeugluftreifen, der im wesentlichen aus einem mit einem Laufstreifenprofil versehenen Laufstreifen, zwei Seitenwänden, einer mit Karkassenlagen und ggf. mit . Verstärkungselementen versehene Karkasse, einem aus Gürtellagen und ggf. einer ein-oder mehrteiligen Gürtelbandage und weiteren Einlagen bestehenden Gürtelpaket, sowie aus zwei mit Wulstkernen versehenen Reifenwülsten besteht, wobei der schallabsorbierende Einbau für einen Sitz auf der Felge vorgesehen ist und innerhalb des Luftreifens die Felge ringförmig umgibt. Die Erfindung betrifft ebenfalls ein Fahrzeugrad mit solchen Einbauten.

Die Schallabstrahlung eines Kraftfahrzeugreifens trägt neben Wind- und Motorgeräuschen relativ stark zur gesamten Geräuschemission eines Fahrzeuges bei. Eine der Ursachen ist hierbei das Abrollgeräusch, welches durch das Auftreffen des Profiles der Reifenlauffläche auf die Fahrbahnoberfläche entsteht, wobei die Gestaltung des Reifenprofils einen wesentlichen Einfluß hierauf nimmt. Hier sind bereits vielerlei Maßnahmen bekannt, die durch Änderungen der Pitchfolgen eine Lärmreduzierung im Hinblick auf die im hörbaren Bereich unangenehmen Frequenzen erzielten, indem eine Verteilung auf ein breiteres Frequenzband und eine Vermeidung der sogenannten _{"}Peaks" erreicht wurde. Die Schwierigkeiten, die sich hierbei genauso wie bei dem Einsatz lärmmindernder Gummimischungen ergaben, liegen in dem besonderen Einfluß, den Laufstreifenprofil und auch Gummimischung auf die Fahreigenschaften des Fahrzeuges besitzen.

Weitere Entwicklungen gehen dahin, den beim Fahren bzw. Rollen der Reifen entstehenden Schall möglichst in unmittelbarer Nähe des Entstehungsbereiches zu absorbieren, indem beispielsweise in den Radkästen der Kraftfahrzeuge schallabsorbierende Vorrichtungen angebracht werden. Auch hier sind der zusätzliche Aufwand und die Veränderungen an der Karosserie als nachteilig zu bemerken.

Eine weitere Schallursache sind die Schwingungen des Laufstreifens und der Seitenwände eines sich drehenden Fahrzeugreifens, die beim Verlassen der Radaufstandsfläche in ihren Eigenschwingungsformen ausschwingen. Auch die Eigenschwingungsformen des Gürtels machen sich hier verstärkt bemerkbar. Hier sind bereits Maßnahmen zur Versteifung der Seitenwände bzw. zur Verbindung beider Seitenwände innerhalb des Luftreifens mit Stegen bekannt.

All diese Schwingungen übertragen sich auch auf die Luftsäule im Reifeninneren, die diese wiederum zu einem nicht geringen Teil weiterleitet oder durch die Ausbildung von stehenden Wellen und das Erreichen bestimmter Eigenfrequenzen noch verstärkt und in die Reifenbauteile rückkoppelt.

Bekannt ist ebenfalls das Einbringen von Schaumstoffringen im Torusraum oder auch das Ausfüllen des Torusraumes mit schallabsorbierendem Material, wie es beispielsweise durch die DE 43 25 470 A1 offenbart wird. Eine solche Befüllung erschwert jedoch nicht nur die Montage der Reifen, sondern erhöht auch das Gesamtgewicht und birgt aufgrund von häufig entstehenden ungleichförmigen Befüllungen erhebliche Probleme beim Auswuchten und im Hinblick auf einen gleichförmigen Rundlauf auch bei hohen Geschwindigkeiten.

Die DE 41 20 878 C2 zeigt dahingegen einen Fahrzeugreifen mit Versteifungen im Inneren, die die gegenüberliegenden Seitenwände kraftschlüssig verbinden, wobei die Versteifungen an den Innenseiten der Seitenwände über ringförmige Bänder anvulkanisiert sind. Durch eine solche Anordnung sollen die Schwingungen der Seitenwände und auch ihre Übertragung auf die Luftsäule im Inneren des Reifens gedämpft werden. Die im wesentlichen in Radialrichtung und auch in ihrer Form gleichmäßig gestalteten Versteifungen bilden durch ihre homogene und gleichförmig am Umfang angeordnete Ausbildung jedoch selbst wieder eine schwingungsfähige Struktur, die zwar dämpfend wirkt, jedoch ebenfalls Eigenschwingungen ausbilden kann. Zudem werden lediglich die Seitenwandschwingungen beeinflußt, nicht die Schwingungen des Laufstreifens und des Gürtels.

Die US 5.479.974 zeigt ein Geräuschreduzierungssystem für Reifen mit auf der Felge angebrachten flexiblen, nicht selbsttragenden Klappen, aus vorzugsweise textilen Materialien, welche durch die Fliehkraft in radialer Richtung aufgestellt werden und das Reifeninnere in mehrere Kammern unterteilen. Auch hierdurch sollen Schwingungen im Reifeninneren gedämpft und eine Veränderung der Wellenlänge bzw. der Amplitude bei sich ausbildenden, stehenden Wellen der Luftsäule erreicht werden.

Nachteilig bei dieser Anordnung ist das insbesondere bei niedrigen
Fahrgeschwindigkeiten noch nicht stabile Aufstellen der großflächigen Klappen sowie die Möglichkeit eines _{"}Flatterns" oder _{"}Schlagens" bzw. einer Körperschwingung in Übergangsgeschwindigkeiten zwischen einer stabilen und einer instabilen Position, was gerade durch die relativ große Masse der Einzelelemente (Klappen) zur Entstehung zusätzlicher Geräusche führt.

Für die Erfindung bestand also die Aufgabe, die Schwingungen der im Reifen befindlichen Luftsäule in allen Fahrzuständen zu absorbieren, ohne durch Einbauten ein weiteres stark schwingendes System zu schaffen, und ohne Fahreigenschaften und Konstruktion von Reifenbauteil oder Karosserie ungünstig zu beeinflussen.

Gelöst wird die Aufgabe durch die Merkmale des Hauptanspruchs. Weitere voteithafte Ausbildungen sind in den Unteransprüchen offenbart.

Hierbei besteht der schallabsorbierende Einbau aus einem mit einem streifenförmigen Trägergewebe verbundenen Flor aus flexiblen Fasern, bei dem das Trägergewebe mit seiner dem Flor abgewandten Innenseite auf der Außenseite des Felgenbetts befestigt ist und sich die Fasern des Flors.innerhalb des zwischen Felge und Reifen ausgebildeten Hohlraumes in radialer Richtung erstrecken.

Ein solcher schallabsorbierender Einbau weist eine ausgesprochen geringe Masse bzw. ein geringes Gewicht auf, womit auch bei hoher Rotationsgeschwindigkeit des Rades die entstehenden Fliehkräfte sehr gering gehalten werden und keine merkbar erhöhte Belastung für Konstruktionsteile wie Lager, Radträger, Stabilisatoren etc. entsteht. Durch die flexible Ausbildung der Fasern ist darüber hinaus eine problemlose Montage des Reifens auf der Felge möglich, da der Reifenwulst ohne weiteres über die Fasern hillweggleiten und bis zum gegenüberliegenden Felgensitz geschoben werden kann.

Des Weiteren besitzt ein solcher aus sich radial innerhalb des zwischen Felge und Reifen ausgebildeten Hohlraumes erstreckenden Fasern bestehender schallabsorbierender Einbau eine außerordentlich hohe Absorptionsfähigkeit über ein sehr breites Frequenzband. Hierbei werden die besonders intensitätsstarken Komponenten eines Schallfeldes unabhängig von der Frequenz absorbiert. Die einzelnen dicht aneinander angeordneten und sich radial erstreckenden Fasern bilden dabei einen Absorptionskörper, der nicht nur stark dämpfend wirkt, sondern auch die Ausbildung von stehenden Wellen weitestgehend verhindert.

Die Breite des Trägergewebestreifens kann hierbei in beliebiger Weise ausgebildet sein, also sich beispielsweise auch über die gesamte freie Felgenbreite zwischen den Reifenwülsten erstrecken, nimmt jedoch vorzugsweise lediglich einen Bruchteil der Felgenbreite ein, da hierdurch eine einfachere Montage ermöglicht wird.

Eine besonders vorteilhafte Ausbildung des schallabsorbierenden Einbaus besteht darin, daß die Fasern des Flors als nicht selbsttragende Fasern ausgebildet sind, die sich bei Drehung des Fahrzeugrades unter Fliehkrafteinfluß innerhalb des zwischen Felge und Reifen ausgebildeten Hohlraumes in radialer Richtung aufstellen.

Durch eine solche Ausbildung wird die Montage noch einmal vereinfacht, da die nicht selbsttragenden Fasern sich ohne Fliehkrafteinfluß an die Felge anlegen bzw. unter Schwerkrafteinfluß eine Ruhelage einnehmen und beispielsweise einem auf die Felge aufzuziehenden Reifen, der ja mit seinen Reifenwülsten durch das Tiefbett geführt wird, keinerlei Widerstand entgegensetzen. Darüber hinaus können bei einer solchen Ausführung jedwede Materialien für Fasern benutzt werden, insbesondere solche, die besonders weich oder elastisch ausgebildet sind und aus diesem Grunde erhöhte Absorptionseigenschaften aufweisen, wenn sie sich unter Fliehkrafteinfluß aufstellen.

Eine weitere vorteilhafte Ausbildung besteht darin, daß die Fasern des Flors und/oder die Fasern des Trägergewebes aus mehreren und gegebenenfalls miteinander verwirkten oder verseilten Einzel-Filamenten oder aus Filament-Bündeln bestehen.

Hierbei werden insbesondere die Filamente der Florfasern in einem lockeren Verbund so verwirkt oder verseilt, daß die Einzel-Filamente einander nicht über die gesamte Faserlänge berühren, wodurch Öffnungen oder Hohräume im verseilten oder verwirkten und die jeweilige Faser bildenden Filamentverbund entstehen, wodurch die Fähigkeit zur Schallabsorption weiter erhöht wird. Ein weiterer Effekt, der sich hierdurch ergibt, ist der, daß diese Öffnungen oder Hohräume mit stärker werdender Fliehkraft wieder geschlossen werden, wodurch eine Einstellung der Absorptionsfähigkeit in Abhängigkeit von der Raddrehzahl ermöglicht wird.

Auf diese Weise können die Fasern des Flors nicht nur in ihrer Elastizität eingestellt werden, sondern auch aus Einzel-Filamenten unterschiedlicher Materialien mit angepaßten Absorptionseigenschaften/Dämpfungseigenschaften ausgebildet werden. Auch für das Trägergewebe ergibt sich dieser Vorteil, wobei zusätzlich auch noch die Festigkeit bzw:die Dehnungsfähigkeit des Trägergewebes angepaßt werden kann.

Eine weitere vorteilhafte Ausbildung besteht darin, daß die einzelnen Fasern und / oder Filamente des Flors mindestens teilweise als räumlich geformte Fasern oder Filamente, insbesondere als wellenförmig oder schraubenlinienförmig geformte Fasern oder Filamente ausgebildet sind.

Durch eine solche Ausbildung erhöht sich die Schallabsorptionsfähigkeit des Flors noch einmal deutlich. Dies entsteht u. a. dadurch, daß durch die räumliche Verformung insgesamt längere Materialfasern und somit mehr Dämpfungsmaterial zur Verfügung stehen, als auch dadurch, daß durch eine solche Wellenform oder eine schraubenlinienförmige Verdrehung oder Verdrillung eine vergrößtere und stärker diffuse Reflektion der Schallwellen erfolgt, wodurch die Ausbildung von stehenden Wellen weiter erschwert wird.

Diese Effekte lassen sich durch eine weitere vorteilhafte Ausbildung noch verstärken, bei der die einzelnen Fasern des Flors miteinander in lockerer Verbindung verwirkt oder verwoben sind.

Vorteilhafterweise sind die Fasern des Flors und/oder die Fasern des Trägergewebes als Kunstfasern, vorzugsweise als Polyamid-, Polyester-, Polyvinyl-Alkohol (PVA)-, Aramid-, Kohle- oder Glasfasern ausgebildet. Durch den Einsatz solcher Materialien, gegebenenfalls auch durch den Einsatz gemischter Materialien, kann je nach Auslegung Einfluß auf die Absorptionsfähigkeit des schallabsorbierenden Einbaus genommen werden. Vorteilhaft im Hinblick auf die Absorptionsfähigkeit ist dabei auch die Verwendung von Hohlfasern.

In einer weiteren vorteilhaften Ausbildung ist das Trägergewebe als geschlossener Ringstreifen ausgebildet, wobei die Fasern des Trägergewebes mindestens teilweise aus schrumpfbarem Material bestehen. Damit kann der schallabsorbierende Einbau als vorgefertigter Ring mit einem solchen Übermaß hergestellt werden, daß er leicht über die Felgenhörner geschoben werden kann, und danach durch einen Schrumpfprozeß, beispielsweise durch wasserschrumpfbare oder wärmeschrumpfbare Garne oder Filamente auf der Felge in seiner Endposition fixiert werden kann, wodurch eine Klebung oder weitere Fixierungen entfallen können.

Natürlich kann das Trägergewebe auch auf seiner Innenseite mit der radialen Außenseite der Felge verklebt werden, wobei vorzugsweise ein von Flor befreiter Überlappungsbereich vorzusehen ist, um die Enden des Trägergewebestreifens zu verbinden. Gleichermaßen und je nach zu erwartenden Fliehkräften bzw. Rotationsgeschwindigkeiten kann der Trägergewebestreifen unter Bildung eines solchen Überlappungsbereiches um die radiale Außenseite der Felge gespannt werden, wobei dann lediglich die Enden des Trägergewebes miteinander verklebt werden.

Eine weitere Möglichkeit besteht darin, den Trägergewebestreifen als geschlossenen ringförmigen Streifen auszuführen, wobei das Trägergewebematerial eine solche Elastizität aufweist, daß es noch relativ leicht über die Felgenhörner gehoben werden kann und dann durch Rückfederung sich auf der Felge elastisch festspannt.

Vorteilhafterweise ist das Trägergewebe mindestens auf seiner Innenseite mit schalldämpfendem Material kaschiert, vorzugsweise mit Schaum- oder Gummilagen. Hierdurch erreicht man neben der Schallabsorption durch die Florfasern innerhalb des Torusraumens auch eine Dämpfung der Körperschwingungen der Felge, wodurch die Übertragung solcher Schwingungen in den Torusraum erschwert wird.

Sowohl die Florfasern als auch die Fasern des Trägergewebes können dabei als Fasern mit hohem Elastizitätmodul und hoher Temperaturbeständigkeit ausgebildet sein, so daß auch bei Erwärmung des Reifens bzw. der Reifenteile oder des Torusraumes eine hohe Dämpfung, eine gesicherte Fixierung, und eine sichere Schallabsorption erreicht wird.

Eine weitere vorteilhafte Ausbildung besteht darin, daß das Trägergewebe mindestens einseitig im Bereich des Wulstprofiles bzw. im Bereich des Felgensitzes mit dem Reifenwulst verbunden ist. Durch eine solche Ausbildung können Reifen und Trägergewebe mit Flor in einem Arbeitsgang auf der Felge montiert werden, wobei bei lediglich einseitiger Verbindung eine Verwendung von schrumpfbaren Fasern für das Trägergewebe sinnvoll ist, wodurch eine einseitige Klemmung im Wulstbereich und ein Aufschrumpfen der verbleibenden Breite des Tägergewebestreifens auf die radiale Felgenaußenseite erfolgt. Bei einer beidseitigen Verbindung überdeckt der Tägergewebestreifen die gesamte Felgenbreite und wird im Felgensitzbereich durch den Reifenwulst beidseitig geklemmt, wobei auch hier die Verwendung von schrumpfbaren Fasern für das Trägergewebe für. ein Aufschrumpfen über die gesamte Felgenbreite sinnvoll ist.

Eine weitere vorteilhafte Ausbildung besteht darin, daß die Florfasern über einzelne Umfangsbereiche der Felge unterschiedlich lang ausgebildet sind. Werden beispielsweise in symmetrisch über den Umfang der Felge verteilten Winkelabständen von 60° oder 30° Bereiche des schallabsorbierenden Einbaus mit gegenüber den übrigen Bereichen längeren Florfasern versehen, wird die Absorbtionsfähigkeit im Hinblick auf im Torusraum entstehende Umfangs-Schallwellen weiter erhöht.

Anhand eines Ausführungsbeispieles soll die Erfindung näher erläutert werden. Es zeigen:
- Fig. 1: einen erfindungsgemäßen schallabsorbierenden Einbau innerhalb eines Fahrzeugreifens
- Fig. 2: eine vergrößerte Ansicht einer weiteren Ausführungsform eines schallabsorbierenden Einbaus nach Figur 1 in prinzipieller Darstellung
- Fig. 3: einen möglichen Aufbau von Trägergewebe und Flor-Fasern bei einem schallabsorbierenden Einbau gemäß Figur 1.
- Fig. 4: einen weiteren möglichen Aufbau von Trägergewebe und Flor-Fasern bei einem schallabsorbierenden Einbau gemäß Figur 1.

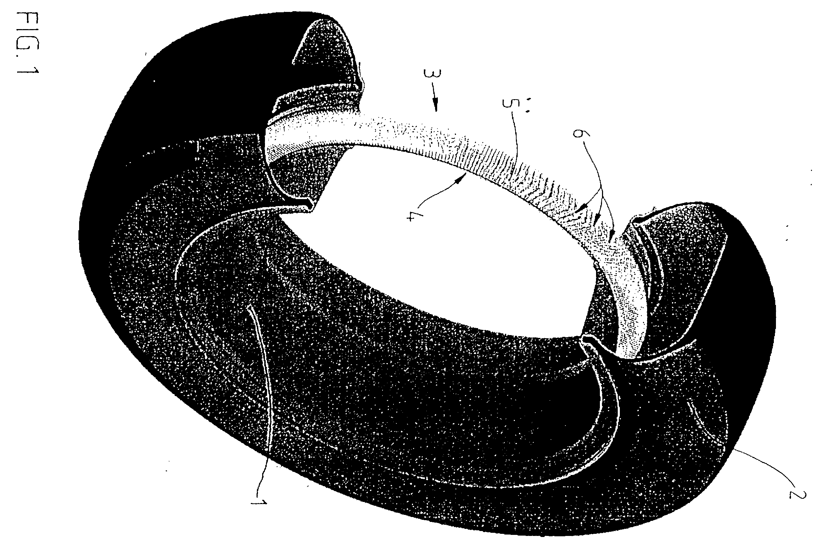

Die Figur 1 zeigt einen auf einer Standardfelge 1 aufgezogenen Fahrzeugluftreifen 2, wobei die Felgenscheibe - hier der besseren Übersicht halber - nicht dargestellt ist.

Auf der Außenseite der Standardfelge 1 ist ein schallabsorbierender Einbau 3 befestigt, der aus einem streffenförmigen Trägergewebe 4 besteht, welches mit einem Flor 5 aus flexiblen Fasern verbunden ist. Die Breite des Trägergewebestreifens 4 nimmt dabei lediglich einen Bruchteil der Felgenbreite ein.

Die Figur 1 stellt hierbei den Zustand dar, der sich unter Fliehkrafteinfluß, d. h. unter Rotation von Felge und Luftreifen ergibt. Die Fasern 6 des Flors sind dabei als nicht selbsttragende Polyesterfasern ausgebildet, die sich bei Drehung des Fahrzeugrades unter Fliehkrafteinfluß innerhalb des zwischen Felge und Reifen ausgebildeten Hohlraumes in radialer Richtung aufstellen. Bei Stillstand des Rades legen sich die Fasern des Flors unter Schwerkrafteinfluß an das Trägergewebe bzw. an die Felge an oder hängen im unteren Bereich in den genannten Hohlraum.

Der hier geschlossene Trägergewebestreifen 4 besteht hierbei aus Fasern aus feuchtigkeitsschrumpfbaren Polyvinyl-Alkohol (PVA), wodurch sich eine sehr einfache Montage des Trägergewebestreifens ohne Klebungen, Überlappungen etc. ergibt. Der Ringstreifen wird hierzu über die Felgenhörner geschoben und dann befeuchtet, wonach er schrumpft und sich auf der Felge in der geeigneten Position festzieht.

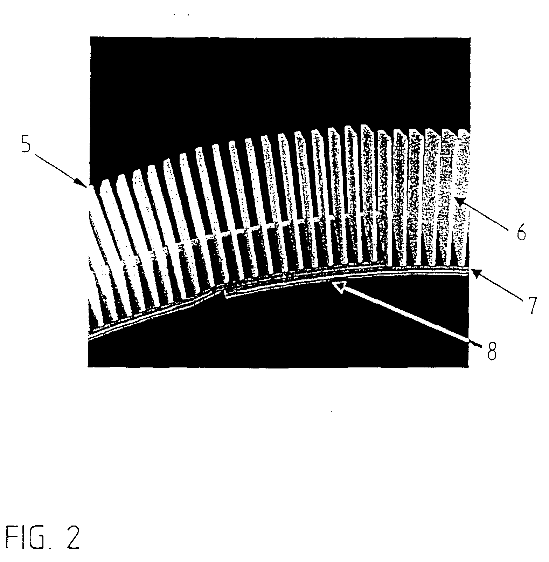

Die Figur 2 zeigt eine vergrößerte Ansicht einer weiteren Ausführungsform eines schallabsorbierenden Einbaus nach Figur 1 in prinzipieller Darstellung.

Auch hier erkennt man wieder einen Flor aus nicht selbsttragenden flexiblen Fasern 6, die sich unter Fliehkrafteinfluß innerhalb des zwischen Felge und Reifen ausgebildeten Hohlraumes in radialer Richtung aufstellen.

Das hier gezeigte Trägergewebe 7 besteht ebenfalls aus Polyesterfasern und ist mit der hier nicht näher dargestellten Felge unter Bildung eines Überlappungsbereiches 8 verklebt. Hierzu ist der Trägergewebestreifen 7 einseitig in Länge des Überlappungsbereiches von Flor befreit, wodurch auch die Trägergewebestreifenenden miteinander verklebt werden können.

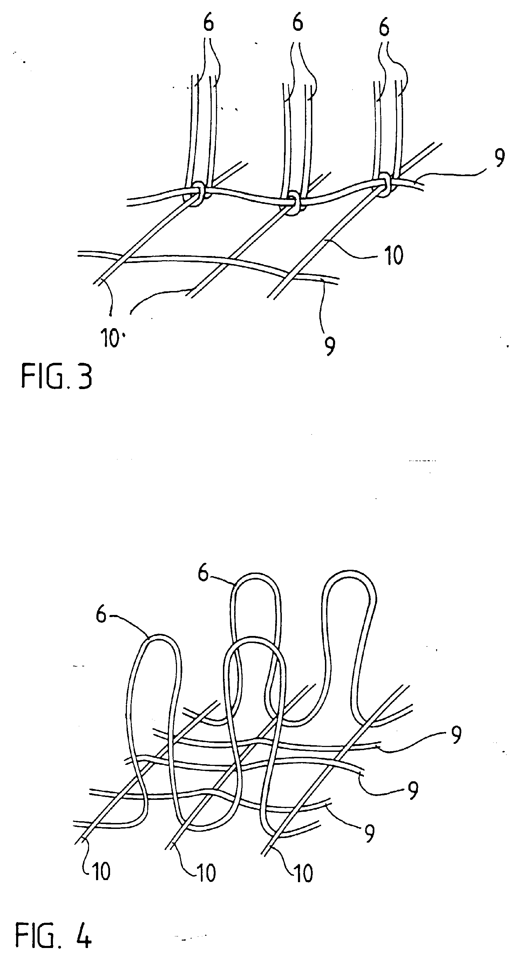

Die Figur 3 zeigt einen möglichen Aufbau von Trägergewebe und Florfasern bei einem schallabsorbierenden Einbau gemäß Figur 2 oder 1, wobei die Fasern des Trägergewebes 9 und 10 in Form von Kette und Schuß miteinander verwirkt oder verwoben sind und die flexiblen und nicht selbsttragenden Fasern des Flors 6 mit Schlingen innerhalb des Trägergewebes befestigt sind. Die Abstände zwischen den Schußfasern 9 und den Kettfasern 10 sowie auch deren Material können hierbei zur Anpassung der Festigkeit des Trägergewebestreifens variiert werden.

Die Figur 4 zeigt einen weiteren möglichen Aufbau von Trägergewebe und Flor-Fasern bei einem schallabsorbierenden Einbau gemäß Figur 2 oder 1, wobei die Fasern des Trägergewebes 9 und 10 wiederum in Form von Kette und Schuß miteinander verwirkt oder verwoben sind und die flexiblen und nicht selbsttragenden Fasern des Flors 6 als durchlaufende _{"}Endlos"-Schlaufen innerhalb des Trägergewebes befestigt sind. Die Anzahl der und die Abstände zwischen den Schußfasern 9 und Kettfasern 10 sowie auch deren Material können hierbei zur Anpassung der Festigkeit des Trägergewebestreifens variiert werden.

### Bezugszeichenliste

- 1: Standardfelge
- 2: Luftreifen
- 3: schallabsorbierender Einbau
- 4: Trägergewebestreifen
- 5: Flor aus flexiblen Fasern
- 6: Fasern des Flors
- 7: Trägergewebestreifen
- 8: Überlappungsbereich
- 9: Fasern des Trägergewebes (Kettfasern)
- 10: Fasern des Trägergewebes (Schußfasern)

## Patentansprüche

1. Schallabsorbierender Einbau für ein Fahrzeugrad mit einem Fahrzeugluftreifen, der im wesentlichen aus einem mit einem Laufstreifenprofil versehenen Laufstreifen, zwei Seitenwänden, einer mit Karkassenlagen und ggf. mit Verstärkungselementen versehene Karkasse, einem aus Gürtellagen und ggf. einer ein- oder mehrteiligen-Gürtelbandage und weiteren Einlagen bestehenden Gürtelpaket, sowie aus zwei mit Wulstkernen versehenen Reifenwülsten besteht, wobei der schallabsorbierende Einbau für einen Sitz auf der Felge vorgesehen ist und innerhalb des Luftreifens die Felge ringförmig umgibt,
**dadurch gekennzeichnet,**
daß der schallabsorbierende Einbau (3) aus einem mit einem streifenförmigen Trägergewebe (4) verbundenen Flor (5) aus flexiblen Fasern (6) besteht, bei dem das Trägergewebe mit seiner dem Flor abgewandten Innenseite auf der Außenseite des Felgenbetts befestigt ist und sich die Fasern (6) des Flors (5) innerhalb des zwischen Felge (1) und Reifen (2) ausgebildeten Hohlraumes in radialer Richtung erstrecken.

2. Schallabsorbierender Einbau nach Anspruch 1, dadurch gekennzeichnet, daß die Fasern (6) des Flors (5) als nicht selbsttragende Fasern ausgebildet sind, die sich bei Drehung des Fahrzeugrades unter Fliehkrafteinfluß innerhalb des zwischen Felge und Reifen ausgebildeten Hohlraumes in radialer Richtung aufstellen.

3. Schallabsorbierender Einbau nach Anspruch 1 oder 2, dadurch gekennzeichnet, daß die Fasern (6) des Flors (5) und / oder die Fasern (9, 10) des Trägergewebes aus mehreren und ggf. miteinander verwirkten oder verseilten Einzel-Filamenten oder aus Filament-Bündeln bestehen.

4. Schallabsorbierender Einbau nach Anspruch 1 bis 3, dadurch gekennzeichnet, daß die einzelnen Fasern und / oder Filamente des Flors (5) mindestens teilweise als räumlich geformte Fasern oder Filamente, insbesondere als wellenförmig oder schraubenlinienförmig geformte Fasern oder Filamente ausgebildet sind.

5. Schallabsorbierender Einbau nach Anspruch 3 oder 4, dadurch gekennzeichnet, daß die einzelnen Fasern des Flors miteinander verwirkt oder verwoben sind.

6. Schallabsorbierender Einbau nach Anspruch 1 bis 5, dadurch gekennzeichnet, daß die Fasern des Flors und / oder die Fasern des Trägergewebes als Kunstfasern, vorzugsweise als Polyamid-, Polyester-, Polyvinyl-Alkohol (PVA)-, Aramid-, Kohle-oder Glasfasern ausgebildet sind.

7. Schallabsorbierender Einbau nach Anspruch 1 bis 6, dadurch gekennzeichnet, daß das Trägergewebe als geschlossener Ringstreifen ausgebildet ist, wobei die Fasern des Trägergewebes mindestens teilweise aus schrumpfbarem Material bestehen.

8. Schallabsorbierender Einbau nach Anspruch 1 bis 7, dadurch gekennzeichnet, daß das Trägergewebe mindestens auf seiner Innenseite mit schalldämpfendem Material kaschiert ist, vorzugsweise mit Schaum- oder Gummilagen.

9. Schallabsorbierender Einbau nach einem oder mehreren der Ansprüche 1 bis 8, dadurch gekennzeichnet, daß das Trägergewebe mindestens einseitig im Bereich des Wulstprofiles bzw. im Bereich des Felgensitzes mit dem Reifenwulst verbunden ist.

10. Schallabsorbierender Einbau nach Anspruch 1 bis 9, dadurch gekennzeichnet, daß die Florfasern über einzelne Umfangsbereiche der Felge unterschiedlich lang ausgebildet sind.

11. Kraftfahrzeugrad mit einem auf einer Felge aufgebrachtem Luftreifen und einem auf der Felge befestigten und innerhalb des zwischen Felge und Reifen ausgebildeten Hohlraumes befindlichen ringförmigen Einbau aus einem mit einem streifenförmigen Trägergewebe verbundenen Flor aus flexiblen Fasern, welcher gemäß zumindest einem der Ansprüche 1 bis 10 ausgeführt ist.
